# EUROPEAN PATENT APPLICATION

(11) **EP 1 241 907 A1**
(43) Date of publication of application: **18.09.2002**
(21) Application number: 01106174.4
(22) Date of filing: 13.03.2001
(51) Int. Cl.: H04Q 7/38

(54) **Identification of a mobile terminal in a wireless network**

(71) Applicant: Sony International (Europe) GmbH, 10785 Berlin (DE)
(72) Inventor: Widell, Svante, c/oDigital Telecommunications Eur., 85609 Aschheim (DE)
(74) Representative: Körber, Martin, Dipl.-Phys.

(57) **Abstract**

The present invention relates to a method for identifying a mobile terminal (1) for a wireless telecommunication system in a telecommunication network (11), comprising the steps of generating an individual mobile identification number by the mobile terminal (1) at least for every login to an access node (10) of the network (11), and transmitting the individual mobile identification number to the access node (10) by the mobile terminal (1).

The present invention relates further to a mobile terminal (1) for a wireless telecommunication system for carrying out this method.

## Description

### Identification of a mobile terminal in a wireless network

The present invention relates to method for identifying a mobile terminal for a wireless telecommunication system in a telecommunication network, a mobile terminal for carrying out this method and a method for verifying an identification of a mobile terminal.

In some wireless telecommunication systems, e.g. in the Global System for Mobile Communication (GSM) and the Universal Mobile Telephone System (UMTS), an "electronic identity" is defined for uniquely identifying mobile terminals (e.g. mobile telephones) that have been approved for distribution on the market. An example for an electronic identity is known the International Mobile Equipment Identity (IMEI), which is a unique identity number of the respective mobile terminal.

The IMEI comprises the Type Approval Code (TAC), a Final Assembly Code (FAC) and a serial- (SN) or production number (PN). Optionally the IMEI comprises a software version number (SV).

The IMEI of a mobile terminal logged in can be requested by a network access node (base stations) of the mobile telecommunication system by a so called "identity request" signalling procedure. After receiving this request from the network access node, the mobile telecommunication means transmits the IMEI. The transmitted IMEI can be checked against a so called "black list" by the access node of the network to avoid stolen mobile terminals to be used. Furthermore, the IMEI can be checked against a range of valid identities to avoid mobile terminals with undefined and/or invalid IMEI-number to enter (login to) the network.

The essential requirement which have to be fulfilled by a mobile terminal, which is put on the common market, are regulated by the current R&TTE directives (radio and telecommunication terminal equipment). The IMEI of a mobile terminal is the only way to distinguish a mobile terminal which does not fulfil the legal requirements (e.g. when it is a stolen terminal) and to deny access of such a mobile terminal to the network, if necessary.

However, in the prior art it is often very simple to re-program the IMEI of most of the mobile telephones on the market, as the IMEI is typically stored in a flash or EEPROM type of memory.

This re-programming could be performed by persons trying to make stolen mobile telephones usable and by not serious manufacturers/dealers to avoid their mobile terminal being denied from service (denied access to the network). This re-programming can also happen in a legal way by the respective manufacturer of the mobile telephone to adapt the IMEI for changes, e.g. in the so called type approval codes (TAC), which is a part of the IMEI.

It is therefore the object of the present invention to improve the reliability of the identification of mobile terminals accessing an access node of a wireless network.

This object is achieved by a method for identifying a mobile terminal for a wireless telecommunication system in a telecommunication network according to claim 1 and a software product for carrying out this method according to claim 8.

This object is further achieved by a mobile terminal for a wireless telecommunication system for carrying out this method according to claim 9, a mobile terminal for a wireless telecommunication system according to claim 16 and a method for verifying an identification of a mobile terminal according to claim 18.

According to the present invention, at least every time the mobile terminal accesses an access node of a wireless network, the mobile terminal generates an individual mobile identification number, which changes at least at every login. The individual mobile identification number is then transmitted to the access node by the mobile terminal.

Therefore, the mobile terminal comprises a generating means for generating an individual mobile identification number at least for every login to the access node and transmitting means for transmitting the individual mobile identification number to the access node.

The access node receives the individual mobile identification number from the mobile terminal and generates an individual network identification number by its own. Then, the received individual mobile identification number is compared with the generated individual network identification number. As a result of this comparison, either the access node enables the access of the mobile terminal to the telecommunication network or the access node denies the access of the mobile terminal to the telecommunication network.

The generating of a new, individual mobile identification number for any login to the network and an individual network identification number for verifying has the advantage that it is made impossible to "steal" a valid identification number and send it to the access node at every login.

A further solution to protect a preset mobile identification number against an unauthorised access is to store at least a part of a preset identification number (e.g. a part of the IMEI) hardcoded in the storing means. "Hardcoded" means that a part of that number is stored unchangeable, e.g. in a read only memory, which is not rewritable and not erasable. E.g. a part of the IMEI, which is in this case the preset mobile identification number, can be stored hardcoded.

This has the advantage that a part of the preset mobile identification number, which e.g. contains hard and/or software version, can further be changed for the purpose of maintenance or updates, whereby other parts are unchangeable. Since the mobile terminal is only uniquely identified by the whole preset mobile identification number, it is difficult to get a valid identifying number to get access to the network by only changing a part of this preset mobile identification number in opposition to change the whole preset mobile identification number.

The individual mobile identification number can be generated on the basis of a code sent from the access node to the mobile terminal during the login procedure. Thereupon, the mobile terminal generates by means of the generating means the individual mobile identification number and the access node generates the individual network identification number on the basis of this code. To ensure that the individual mobile identification number (and the individual network identification number) changes at every login, the code is also changed for every login procedure.

Advantageously, the generating means of the mobile terminal generates the individual mobile identification number by means of an algorithm. The access node also generates the individual network identification number by means of the same algorithm.

Further, the preset mobile identification number can serve as a basis for generating the individual mobile identification number (e.g. the IMEI, which is stored in a storing means), advantageously in combination with the above mentioned embodiments. Therefore, at least parts of the preset mobile identification number are sent to the access node. Then, the access node generates the individual network identification number after receiving on the basis of the received part of the preset identification number of the mobile terminal.

Advantageously, the storing means stores at least a part of the preset mobile identification number hardcoded, so that it is not changeable. This is e.g. a production number (PN) or serial number (SN) of the IMEI of a mobile terminal. The type approval code (TAC), the facility code (FAC) and the software version (SV, optionally) of this IMEI could be stored in a non-volatile random access memory, so that this part of the IMEI could be changed, e.g. for the propose of maintainance.

To increase the security level against an unauthorised access, the storing means of the mobile telephone further stores an additional mobile identification number, which is stored in a hardcoded manner and/or non-accessable (secret) by the storing means of the mobile terminal. This additional mobile identification number is e.g. a manufacturer code.

Further, at least a part of the preset mobile identification number is transmitted by the mobile terminal and received by the access node.

The additional mobile identification number is advantageously used as a basis for generating the individual mobile identification number. However, this additional mobile identification number is not transmitted to the access node. The access node determines, e.g. by means of a data base access, the corresponding additional network identification number based on the received (parts of the) preset mobile identification number. E.g., the access node determines the manufacturer code on the basis of the received TAC-, SV- and FAC- number accessing a database.

If the mobile terminal sends the valid preset mobile identification number and a valid individual mobile identification number, which bases among others on the additional mobile identification number, e.g. a manufacturer code (MC), the additional network identification number determined by the access node is equal to the additional mobile identification number stored in the mobile terminal. As a result, the generated individual mobile identification number is equal to the individual network identification number.

Thus, the access node carries out the identification of the mobile terminal on the basis of the received preset mobile identification number and/or on the basis of the individual network and mobile identification numbers.

In the following description, a preferred embodiment of the present invention is explained in more detail with reference to the enclosed drawings, in which
Fig. 1 shows a block diagram of a mobile terminal according to the present invention, and
Fig. 2 shows a flow chart of the identification procedure according to the present invention.

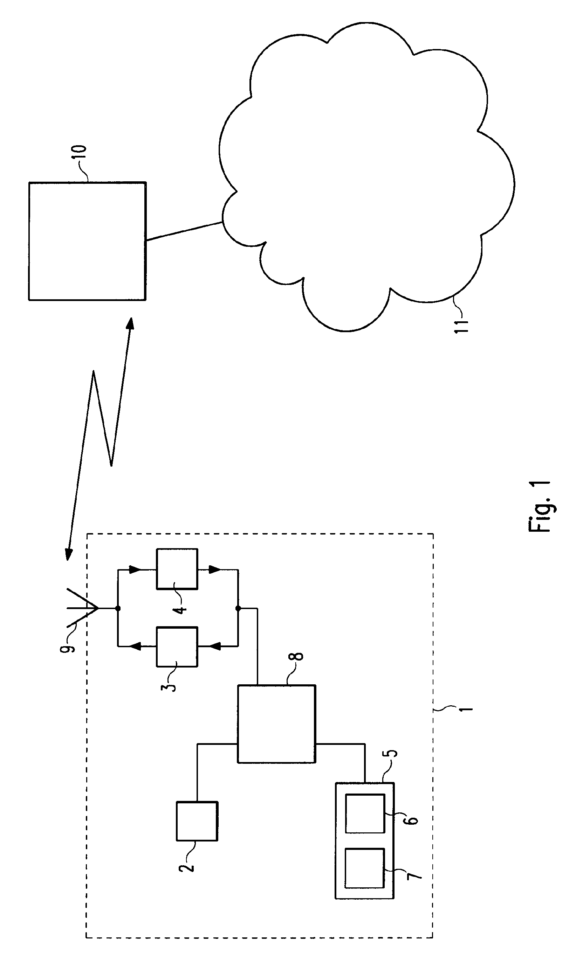

Fig. 1 shows a block diagram of a mobile terminal 1 according to the present invention.

For carrying out the present invention, the mobile terminal 1 comprises the means 2 for generating an individual mobile identification number. The individual mobile identification number is e.g. generated during every login procedure and/or periodically in predetermined time intervals to get access to the network. The individual mobile identification number is then sent to an access node 10 of a telecommunication network 11 of the wireless telecommunication system.

The mobile terminal comprises further a storing means 5, which stores data hardcoded (in a hardcoded storing means 6) as well as softcoded (in a softcoded storing means 7). "Hardcoded" means that the stored data can not be changed, e.g. by means of re-programming. Advantageously, the hardcoded storing means is a read only memory (ROM), which is not rewritable. "Softcoded" means that the stored data can be changed, e.g. by means of re-programming over an interface. The softcoded storing means 7 is advantageously an EEPROM (Electrically Erasable Programmable ROM) or a flash-memory, which can be re-programmed e.g. for the purpose of maintenance or update.

Further, the mobile telephone 1 comprises a processing means 8 for controlling and processing the operation of the mobile telephone 1 and an antenna 9, which is connected to a transmitting means 3 and a receiving means 4 for communicating with other mobile telecommunication means and/or base stations (access node 10) of the wireless telecommunication system over an air-interface.

The elements of the mobile telephone 1, which are further necessary for the operation of the mobile telephone 1, like operational controls, display means, signal processing means, means for in- and outputting audio signals, etc. are also comprised but not shown for the sake of clarity.

According to the present invention, at least for every login a individual, newly generated mobile identification number is transmitted to the access node 10 by the transmitting means 3. This individual identification number is generated anew e.g. for every login procedure. The individual mobile identification number is generated by means of an (advantageously non-accessible) algorithm. Alternatively, the individual identification number can be generated by means of data stored in a look-up table.

The algorithm uses for generating the individual mobile identification number a preset mobile identification number (e.g. the IMEI and optionally comprising the software version SV), which is partly stored in the hardcoded storing means 6 and partly stored in the softcoded storing means 5, an additional mobile identification number (e.g. a manufacturer code), which is non-accessible stored in the hardcoded storing means 6, and a code, which is received from the access node 10 before generating the individual mobile identification number.

To make sure that the individual mobile identification number changes for every login, it for every login session a different code transmitted from the access node 10 to the mobile telephone 1.

After generating the individual mobile identification number as a function of the transmitted code, the preset mobile identification number and the individual generated mobile identification number are sent back to the access node by the transmitting means 3.

The individual mobile identification number and the preset mobile identification number are received by the access node 10, whereupon the access node extracts an individual network identification number. Thereto, the access node 10 determines the code on the basis of at least a part of the received preset mobile identification number. E.g., when the IMEI of a mobile telephone is received, the code (manufacturer code) is determined on the basis of the TAC-, SV- and the FAC- number by means of a database access.

Next, the individual network identification number is extracted by the access node 10 on the basis of the received individual mobile identification number, the received preset mobile identification number, the determined code and the sent code by means of the algorithm.

Then, the individual mobile identification number is compared with the individual network identification number by the access node 10. The access node 10 enables the access for the mobile telephone to the telecommunication network 11 on the result of this comparison, i.e. the access is enabled if the individual mobile identification number is equal to the individual network identification number, and the access is denied if the individual mobile identification number differs from the individual network identification number.

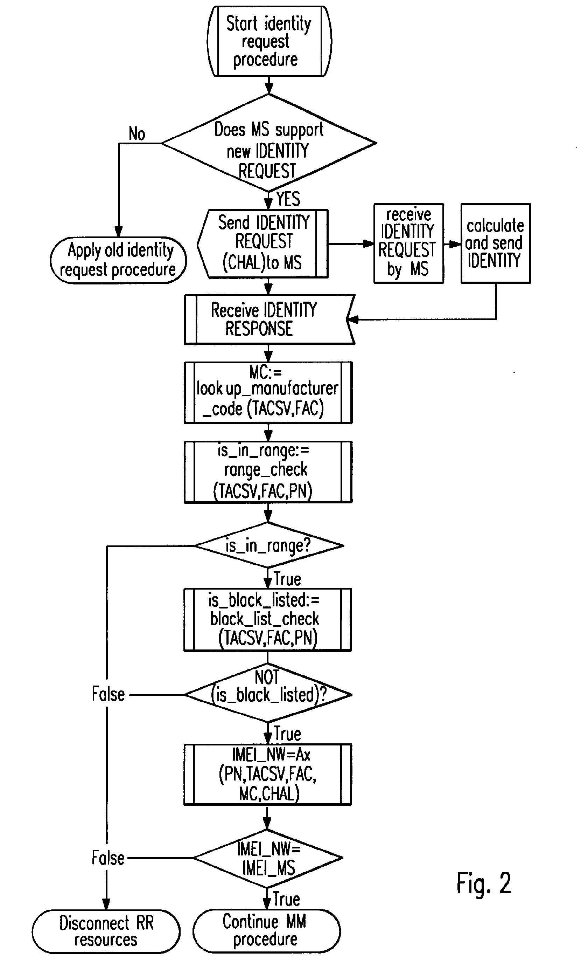

Fig. 2 shows a flow chart of an identification procedure of the mobile telephone to login to the network according to the present invention exemplary on the basis of the IMEI (International Mobile Equipment Identify).

As soon as a mobile telephone logs into the network, the access node starts the identification procedure by "start identity request procedure". First, the access node send a request "does MS (mobile station) support new identity request" to the mobile telephone (MS = mobile station) to determine whether the mobile telephone supports the identification technique according to the present invention. If the mobile does not support this identification technique, an identification procedure according to the prior art is carried out ("apply old identity request procedure").

If the mobile telephone does support the identification according to the present invention, a code (e.g. called CHAL, challenge number) is sent to the mobile telephone by a "send identity request (CHAL to MS)" procedure.

The identity request is received by the mobile telephone, whereupon the mobile telephone uses the received CHAL-code, the internal stored preset mobile identification number (IMEI, consisting of TAC-, optionally SV-, FAC- and PN-number) and the internal stored additional mobile identification number (manufacturer code, MC) to generate an individual mobile identification number (IMEI_MS). The TAC (and if so, SV)-, FAC-, PN- and IMEI_MS-number are transmitted to the access node, where the mobile telephone logs into.

The response, which is sent by the mobile telephone, to the identity request is received by the access node ("receive identity response"). Based upon the received TAC (SV)-and FAC-number, the access node determines by means of a data base access the manufacturer code of the mobile telephone ("MC:=look up_manufacturer_code (TACSV, FAC)"). Further, the access node carries out a plausibility check, to check, whether the received identity number (TACSV, FAC, PN) is in a valid range ("is_in_range: =range_check (TACSV, FAC, PN)").

If the received preset mobile identification number is not in a valid range, the login procedure is terminated ("disconnect resources") and the mobile telephone gets no access to the network.

If the received preset mobile identification number is in a valid range, it is checked, whether the preset mobile identification number is stored in a so called black list ("is_black_listed:=black_list_check (TACSV, FAC, PN)"). When the received preset mobile identification number is stored in a black list, the login procedure is also terminated.

Next, the individual network identification number (IMEI_NW) is calculated by the network. The individual network identification number (IMEI_NW) is generated on the basis of the TACSV-, PN- and FAC-number received from the mobile telephone, the manufacturer code (MC) determined by the access node and the CHAL-number. Then the individual network identification number generated by the access node (IMEI_NW) and the individual mobile identification number generated by the mobile telephone (IMEI_MS) are compared ("IMEI_NW=IMEI_MS").

If the generated individual network identification number is equal to the individual mobile identification number, the mobile telephone gets access to the network, else the login procedure is also terminated.

The generating of a new, individual mobile identification number for any login to the network and an individual network identification number for verifying has the advantage that it is made impossible to "steal" a valid identification number, which is static, and send it to the access node at every login.

The storing of a part of the (preset and additional) mobile identification number hardcoded and another part softcoded has the advantage that a part of the preset mobile identification number, which e.g. contains hard and/or software version, can further be changed for the purpose of maintenance or updates, whereby other parts are unchangeable. Since the mobile terminal is only uniquely identified by the whole preset mobile identification number, it is difficult to get a valid identifying number to get access to the network by only changing a part of this preset mobile identification number in opposition to change the whole preset mobile identification number.

Thus, the present invention enables a high level of security against an unauthorised access to the wireless telecommunication network.

## Claims

1. Method for identifying a mobile terminal (1) for a wireless telecommunication system in a telecommunication network (11), comprising the steps of:
generating an individual mobile identification number by the mobile terminal (1) at least for every login to an access node (10) of the network (11), and
transmitting the individual mobile identification number to the access node (10) by the mobile terminal (1).

2. Method according to claim 1,
**characterized in**
**that** the individual mobile identification number is generated on the basis of a code, which is received from the network (11) by the mobile terminal (1).

3. Method according to claim 1 or 2,
**characterized in**
**that** the individual mobile identification number is generated by means of an algorithm by the mobile terminal (1).

4. Method according to claim 1, 2 or 3,
**characterized in**
**that** the individual mobile identification number is generated by the mobile terminal (1) on the basis of a preset mobile identification number of the mobile terminal (1), which is stored in the mobile terminal (1).

5. Method according to one of the claims 1 to 4,
**characterized in**
**that** the individual mobile identification number is generated by the mobile terminal (1) on the basis of an additional mobile identification number, which is stored hardcoded and/or non-accessible in the mobile terminal (1).

6. Method according to claim 4 or 5,
**characterized by**
transmitting at least parts of the mobile identification number, which is stored in the mobile terminal (1), to the access node (10) by the mobile terminal (1).

7. Method according to one of the claims 1 to 6,
**characterized by**
carrying out the identification of the mobile terminal (1) on the basis of the received parts of the preset mobile identification number and/or on the basis of the individual network identification number and on the basis of the individual mobile identification number by the access node (10) of the network (11).

8. Software product for carrying out the method according to one of the claims 1 to 7 when run on a mobile computing device.

9. Mobile terminal (1) for a wireless telecommunication system for carrying out the method according to one of the claims 1 to 6, comprising
generating means (2) for generating an individual mobile identification number at least for every login to an access node (10) of the network (11), and
transmitting means (3) for transmitting the individual mobile identification number to the access node (10).

10. Mobile terminal (1) according to claim 9,
**characterized in**
**that** the generating means (2) generates the individual mobile identification number on the basis of a code, which is received from the access node (10) by a receiving means (4).

11. Mobile terminal (1) according to claim 9 or 10,
**characterized in**
**that** the generating means (2) generates the individual mobile identification number by means of an algorithm.

12. Mobile terminal (1) according to claim 9, 10 or 11,
**characterized in**
**that** the generating means (2) generates the individual mobile identification number on the basis of a preset mobile identification number, which is stored in a storing means (5).

13. Mobile terminal (1) according to claim 12,
**characterized in**
**that** the storing means (5) stores at least a part of the preset mobile identification number hardcoded.

14. Mobile terminal (1) according to one of the claims 9 to 13,
**characterized in**
**that** the generating means (2) generates the individual mobile identification number on the basis of an additional mobile identification number, which is stored hardcoded and/or non-accessible in the storing means (5).

15. Mobile terminal (1) according to claim 12, 13 or 14,
**characterized by**
transmitting at least parts of the preset mobile identification number to the access node (9) by the transmitting means (3).

16. Mobile terminal (1) for a wireless telecommunication system, comprising
storing means (5) for hardcoded storing at least a part of a preset mobile identification number.

17. Mobile terminal (1) according to claim 16,
**characterized in**
**that** the storing means (5) stores the production number of the mobile terminal (1) hardcoded.

18. Method for verifying an identification of a mobile terminal (1) according to one of the claims 1 to 6, comprising the steps of:
receiving an individual mobile identification number from a mobile terminal (1) by the access node (10) at least for every login of the mobile terminal (1) to the network (11),
generating an individual network identification number by the network (11), and
comparing the received individual mobile identification number with the generated individual network identification number, and
enabling the access of the mobile terminal (1) to the network (11) on the basis of the result of the comparison.

19. Method according to claim 18,
**characterized by**
sending a code to the mobile terminal (1) before receiving the individual identification number from the mobile terminal (1) by the access node (10), and
generating the individual network identification number on the basis of this code by the access node (10).

20. Method according to claim 18 or 19,
**characterized in**
**that** the individual network identification number is generated by means of an algorithm by the access node (10).

21. Method according to claim 18, 19 or 20,
**characterized in**
**that** the individual network identification number is generated by the access node (10) on the basis of a preset mobile identification number of the mobile terminal (1), which is stored in the mobile terminal (1).

22. Method according to claim 21,
**characterized by**
receiving at least a part of the mobile identification number, which is received from the mobile terminal (1) by the access node (10).

23. Method according to claim 21 or 22,
**characterized in**
**that** the individual network identification number is generated by the access node (10) on the basis of an additional network identification number, which is generated by the access node (10) on the basis of received parts of the preset mobile identification number.
